# EUROPEAN PATENT SPECIFICATION

(11) **EP 2 366 906 B1**
(45) Date of publication and mention of the grant of the patent: **16.03.2016**
(21) Application number: 11158384.5
(22) Date of filing: 16.03.2011
(51) Int. Cl.: F04D 13/10, F04D 29/62, H02K 5/132

(54) **Perfected motor unit for pumping devices**
Verbesserte Motorpumpe
Moteur de pompe amélioré

(30) Priority: 17.03.2010 IT VI20100072
(43) Date of publication of application: 21.09.2011
(73) Proprietor: CALPEDA S.p.A., I-36050 Montorso Vicentino (VI) (IT)
(72) Inventor: Matteazzi, Giuliano, 36040 Brendola (VI) (IT); Zamberlan, Fiorenzo, 36070, Trissino (VI) (IT)
(74) Representative: Bonini, Ercole

(56) References cited:
- WO-A1-03/098049
- DE-A1- 4 403 397
- DE-A1-102008 041 743
- DE-C1- 4 315 120
- GB-A- 894 665
- US-A- 2 196 895
- US-A- 3 025 800
- US-A- 4 015 633

## Description

The invention concerns a perfected motor unit particularly suited to be applied to a pump.

Furthermore, the invention concerns a pump for lifting liquids comprising the above mentioned motor unit that is the subject of the invention.

It is known that pumps usually comprise a lifting unit comprising one or more rotors that through their rotation lift the liquid that is introduced at one end towards the opposite end, by increasing its pressure.

Said lifting unit is axially associated with a motor unit that transmits the rotary motion to the above mentioned rotors by means of a transmission shaft.

It is also known that the lifting unit is properly immersed in the liquid to be pumped, while the motor unit is usually of the dry type, so that it is necessary to provide said motor unit with a watertight case that prevents the liquid present outside it from penetrating inside and from coming into contact with the motor components.

In particular, the motor units of the known art comprise a substantially cylindrical jacket to whose ends two watertight covers are applied. Such a pump is known from US 4015633 A.

In order to make the above mentioned coupling stable, the two covers are provided with a plurality of projections that protrude radially with respect to the circumference of the jacket, said radial projections being provided with threaded holes.

In particular, each projection on the first cover corresponds to a projection on the second cover, and during the assembly process they are arranged so that their holes are axially aligned, so as to allow one tie rod per each pair to be inserted and fixed into said holes, thus mutually connecting the two covers at various points of their circumference.

This connection by means of tie rods makes it possible to move the two covers near each other, pressing them on the corresponding ends of the jacket and thus obtaining sufficient tightness between the latter and the two covers. However, the type of solution just described and belonging to the known art poses some drawbacks, which are listed here below.

A first recognized drawback lies in that the presence of external tie rods for connecting the two covers increases the overall radial dimensions of the motor unit, consequently increasing the dimensions of the entire pump.

Furthermore, the closing of the motor unit case by means of external tie rods disadvantageously increases the number of components necessary to obtain said configuration and consequently increases the cost of the motor unit and of the entire pump.

Furthermore, the above mentioned tie rods must be made with materials, like special steel alloys or materials compatible with the rules governing the use of drinking water, capable of resisting the corrosive action exerted by the external liquid, which is not always free from impurities.

Furthermore, the above mentioned closing configuration requires a succession of operations that are not always easy to carry out, like the alignment of the pairs of projections belonging to the two covers and the successive insertion and fixing of the tie rods in the threaded holes present in each pair of projections.

In particular, this last operation becomes more difficult if the tie rods are longer. The difficulty increases even more if said motor unit must be installed inside the external casing of a pump of the submerged type, where, in fact, the motor unit must be assembled inside a space that is slightly larger than its overall size and the tie rods must be centred with respect to the threaded holes provided at one first end of the motor unit by acting manually at the level of the opposite end.

A different solution, described by the document DE 44 03 397, consists of the fixing of a bearing carrier in the housing of an electric motor, which drives an operating machine, said fixing occurring with the help of a blast ring in a ring groove. The blast ring acts as the only fixing element of the bearing carrier, which clings to a housing section on the side which is turned away from the blast ring. The blast ring is designed so that it applies forces to the bearing carrier in the axial direction without damage to the bearing carrier.

The present invention aims to overcome the drawbacks listed above.

In particular, it is a first object of the invention to provide a motor unit that does not have external fixing elements in contact with the liquid to be pumped.

A further object of the present invention is to provide a motor unit requiring assembly operations that are simpler and easier than those required by the motor units of the known art.

Furthermore, it is a further object of the invention to provide a motor unit that is more compact than the motors of the known art.

It is another object of the invention to provide a motor unit that can be pre-assembled before being installed in the pump.

It is a further object of the invention to provide a motor unit whose configuration is such as to allow it to be easily transported and stored.

It is another, yet not the least object of the invention to provide a motor unit that requires a limited number of components.

The objects described above are achieved by a motor unit having the characteristics illustrated in the main claim.

The invention also comprises a pump equipped with the motor unit of the invention.

Further characteristics of the motor unit of the invention are described in the dependent claims.

The motor unit that is the subject of the invention advantageously makes it possible to optimise the tightness created between the covers and the jacket, due to the fact that the locking means used allow the covers to be fixed directly to the jacket, differently from what happens when tie rods are used.

The objects and advantages described above will be highlighted in greater detail in the description of a preferred embodiment of the invention that is supplied as an indicative, non-limiting example, with reference to the enclosed drawings, wherein:
- Figure 1 shows a cross section along a vertical plane of the motor unit that is the subject of the invention;
- Figure 2 shows an exploded axonometric view of the motor unit that is the subject of the invention;
- Figure 3 shows a cross section along a vertical plane of the second cover belonging to the motor unit that is the subject of the invention;
- Figure 4 shows a cross section along a vertical plane of the locking means that allow the second cover to be connected to the jacket of the motor unit of the invention;
- Figure 5 shows a cross section along a vertical plane of the submerged pump of the invention, to which the motor unit of the invention is applied;
- Figure 6 shows a cross section along a vertical plane of a further type of pump comprising the motor unit of the invention.

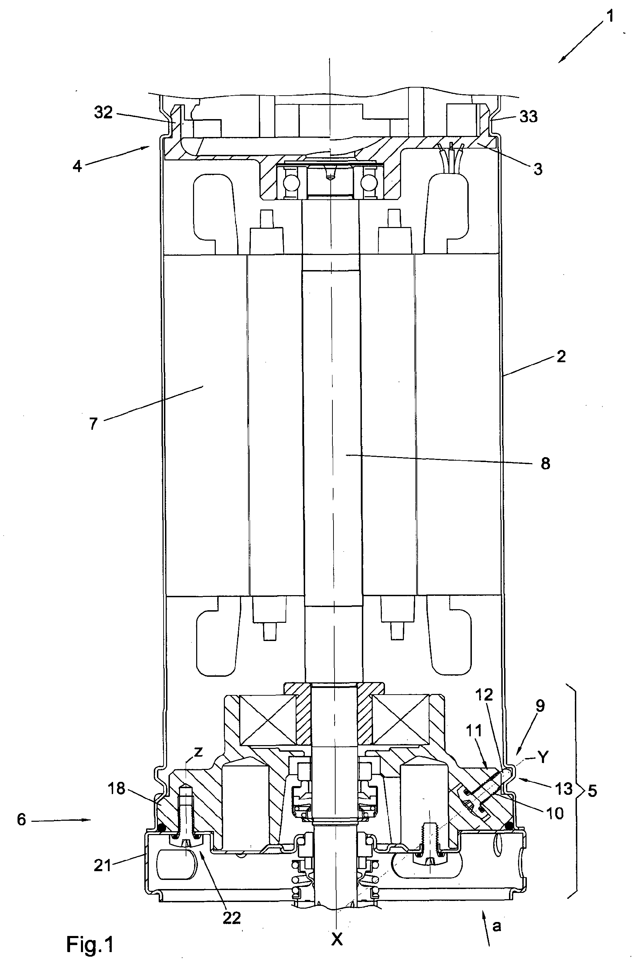

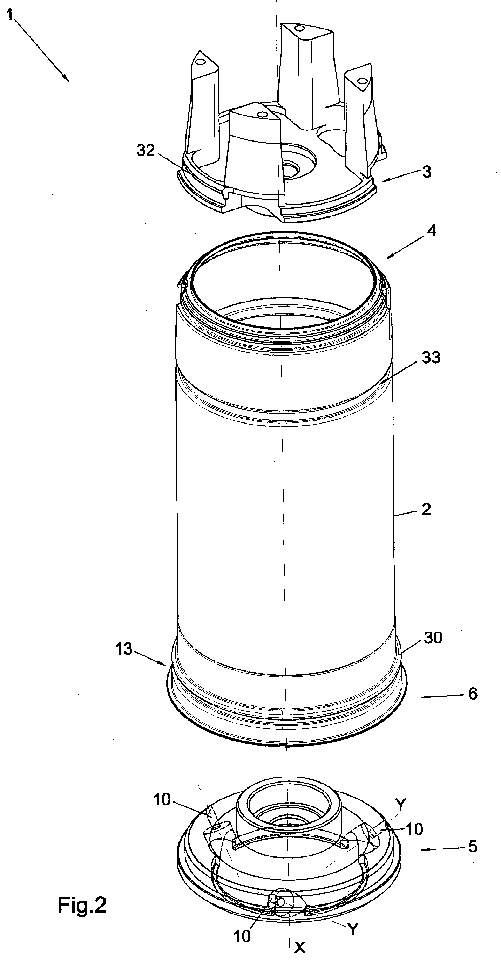

The motor unit that is the subject of the invention is shown in its whole in Figures 1 and 2, where it is indicated by **1**.

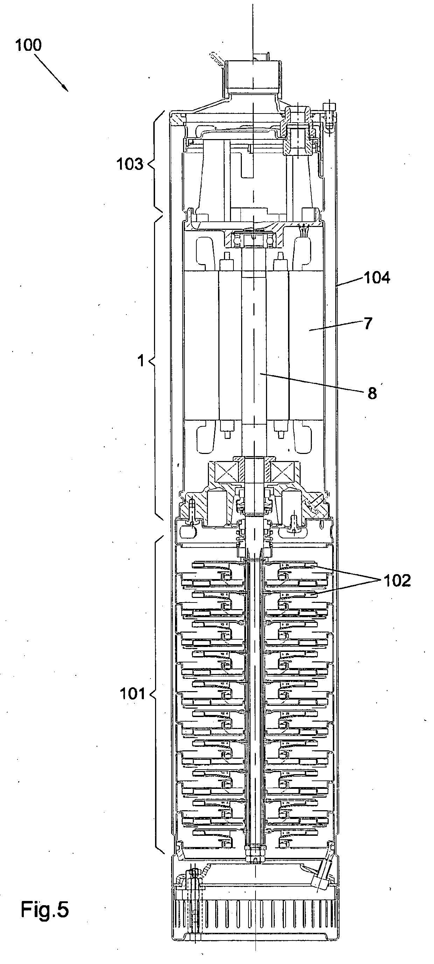

In the preferred embodiment of the invention described herein and illustrated in Figure 5 it can be observed that the motor unit **1** of the invention is applied to a pump of the submerged type **100** that is particularly suited to be placed inside wells or underground pipes.

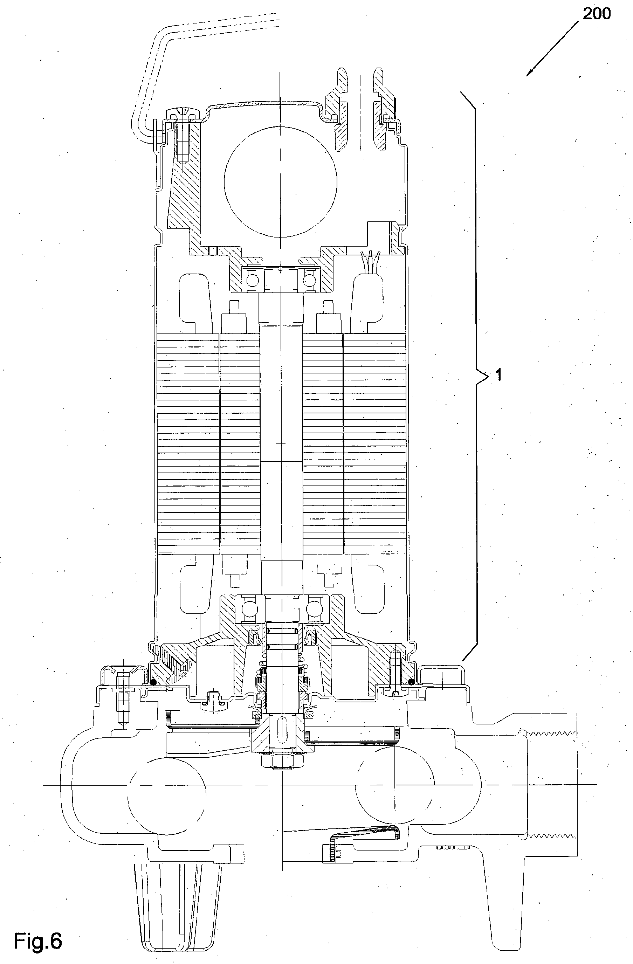

It cannot be excluded, however, that in different embodiments of the invention not described herein, an example of which is however illustrated in Figure 6, the motor unit **1** of the invention can be applied to other types of submerged pumps **200** or other types of pumps different from the submerged type. Furthermore, in alternative embodiments of the invention the motor unit **1** can be used in devices different from liquid pumping devices.

As shown in Figure 1, the motor unit **1** of the invention comprises a jacket **2** substantially cylindrical in shape that is coupled with a first cover **3** at the level of a first end **4**, the top end in the figure, and with a second cover **5** interposed between the second end **6** of the same jacket **2** and the lifting unit **101** of the above mentioned submerged pump **100**, visible in Figure 5.

In the preferred embodiment of the invention the first cover **3** is inserted through interference in the jacket **2** and therefore cannot be removed.

On the contrary, the second cover **5** is removable from said jacket **2**. Obviously, inside said jacket **2**, sealed through the corresponding covers **3** and **5**, there is an electric motor **7** suited to rotate a transmission shaft **8** that projects from the second end **6** towards the lifting unit **101**.

Said transmission shaft **8**, as already explained, is directly connected to the rotors **102** belonging to the lifting unit **101**.

In the preferred embodiment of the invention described herein, the transmission shaft **8** projects so that the whole pack of rotors **102** can be connected to it.

In different embodiments of the motor unit **1** of the invention, which as already said is applied to pumps different from the submerged pump **100**, said transmission shaft **8** can be constructed so that it projects from said jacket **2** less than in the preferred embodiment, as can be seen in Figure 6. Furthermore, in alternative embodiments of the invention not illustrated herein, said transmission shaft **8** can be arranged so that it projects slightly from the second cover **5** from which it exits and said shaft can be provided with a thread or cylindrical hole in which it is successively possible to fix a further shaft projection suited for the type of pump to be assembled.

In this way it is possible to pre-assemble the motor unit **1** of the invention that does not have projecting elements and then it is possible to store it in a simplified way and without occupying too much space.

Furthermore, said solution makes it possible to produce standard motor units that are successively equipped with specific elements, like for example the above mentioned shaft projection, suited to the type of pump to be assembled. Regarding specifically the connection between the second cover **5** and the jacket **2**, this is made possible by locking means **9**.

According to the invention, the above mentioned locking means **9** comprise a plurality of through holes **10** made in the same second cover **5**, each one of which has its axis **y** inclined with respect to the longitudinal axis **x** of the jacket **2**, as shown in Figures 1 and 2.

Each one of the above mentioned holes **10** houses a fixing element **11** so that the free end **12** of the latter facing towards the inside of the jacket **2** is housed in an undercut area **13** defined in the same jacket **2** when this and the second cover **5** are coupled together.

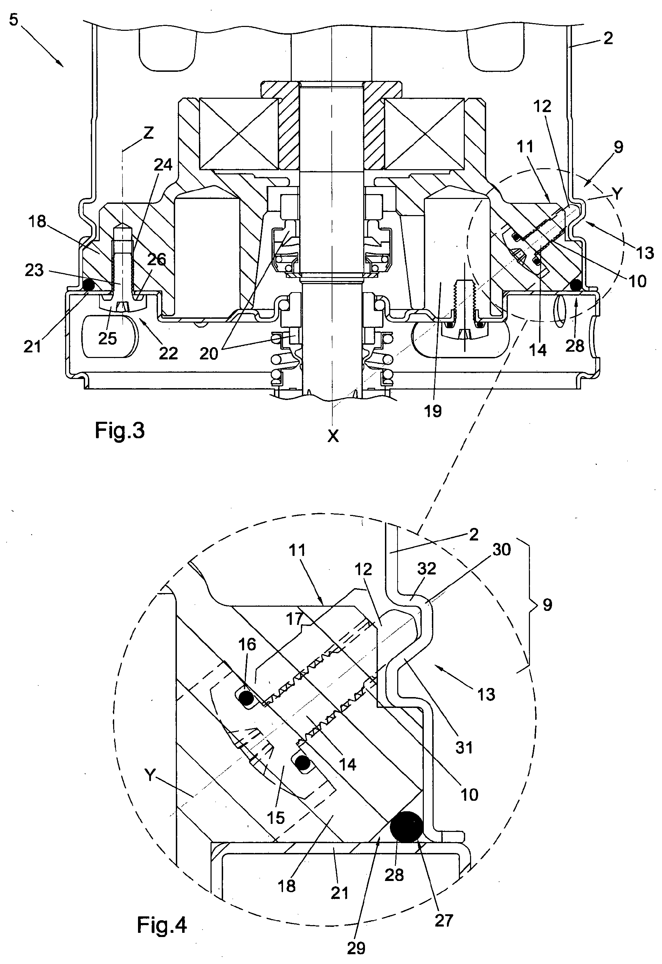

As shown in Figures 3 and 4, to allow the free ends **12** of the fixing elements **11** to be housed therein, the above mentioned undercut areas **13** have their convex surface facing towards the outside of the jacket **2**.

This configuration makes it possible to obtain a counteracting configuration between the undercut area **13** and the free end **12** of the corresponding fixing element **11**, so as to prevent the second cover **5** from accidentally coming off the jacket **2**.

In the preferred embodiment of the invention described herein and as shown in Figure 2, the holes **10** made in the second cover **5** are three, as three is the minimum number of holes necessary to allow the coupling to take place and ensure optimal tightness between the second cover **5** and the jacket **2**.

It cannot be excluded, however, that in different embodiments not described and not illustrated herein the holes **10** can be more than three, in order to further increase the safety of the connection between the two elements. Furthermore, according to the preferred embodiment of the invention described herein, the above mentioned holes **10** have their axis **y** diverging from the longitudinal axis **x** according to the coupling direction, indicated by the arrow a in Figure 1, of the second cover **5** with the jacket **2**.

In this way, as can be clearly understood, once the second cover **5** has been coupled with the jacket **2**, it is possible to insert the fixing elements **11** and act on them from the outside.

Alternatively, the holes **10** may have their axis **y** diverging from the longitudinal axis **x** according to the uncoupling direction of the second cover **5** from the jacket **2**.

This solution, however, although possible and included in the present patent, is clearly less advantageous than the preferred embodiment previously described.

Furthermore, the holes **10** preferably but not necessarily have their axis **y** that is skew with respect to the longitudinal axis **x** of the jacket **2**, as shown in Figure 2.

This specifically means that the axes **y** of the holes **10** do not lie on any plane passing through the longitudinal axis **x** of the jacket **2**.

Practically, the holes **10**, in addition to being inclined with respect to the longitudinal axis **x**, have their projections with respect to the main plane of the second cover **5** that cannot be superimposed to any half line extending radially from the same longitudinal axis **x**.

This configuration makes it possible to further increase the locking action and the tightness between the second cover **5** and the jacket **2**.

It cannot be excluded that in different embodiments of the motor unit **1** of the invention the holes **10** can have their axis **y** only and exclusively inclined with respect to the longitudinal axis **x**.

As shown in Figure 3, in the embodiment of the invention described herein the fixing elements **11** are screws **14**.

In particular, as shown in Figure 3, in the preferred embodiment of the invention said screws **14** are provided with a sealing element **16** on the underside **15** of their head, more specifically with an O ring, so as to prevent the external liquid from flowing towards the inside of the electric motor **7** through the holes **10** in which the screws **14** are inserted.

Furthermore, the screws **14** used in the preferred embodiment have a substantially cylindrical body **17** at the level of their free end **12**, threaded between the same cylindrical end **12** and the underside **15** of the head, so as to allow fastening by screwing the same screws **14** in corresponding threads made in the inner surface of each hole **10**.

In greater detail, as regards the preferred embodiment of the motor unit **1** of the invention described herein, as shown in Figure 3, the second cover **5** comprises an internal part **18** in which it is possible to identify, in addition to the above mentioned holes **10**, an oil chamber **19** that makes it possible to enhance the insulation between the inside and the outside of the jacket **2** and a sealing unit **20** that serves to allow the transmission shaft **8** to extend from the inside of the jacket **2** towards the outside, without problems due to infiltration of the pumped liquid.

The second cover **5**, furthermore, comprises an external part **21** fixed to the above mentioned internal part **18** through second fixing elements **22**, so as to cover the various components described up to now and prevent them from coming directly into contact with the liquid.

In the preferred embodiment of the invention, even in this case, said second fixing elements **22** are screws **23** that are screwed into apposite second holes **24** defined in the internal part **18**, each one of which substantially has its axis **z** parallel to the longitudinal axis **x** of the jacket **2**, as shown in Figure 3. As in the previous case, also in this case the underside **25** of the head of said second screws **23** is provided with sealing elements **26**, specifically O rings, in order to prevent the external liquid from penetrating inside through said second holes **24**.

Finally, preferably but not necessarily, as shown in Figure 4, at the level of the entire edge of the second cover **5** there are sealing means **27** suited to come into contact with and to counteract the inner surface of the jacket **2**, so as to obtain improved tightness.

In the specific case of the preferred embodiment described herein, tightness is obtained by means of a sealing ring **28**, arranged in the recess **29** defined by the coupling of the above mentioned internal part **18** with the corresponding external part **21**, as shown always in Figure 4.

Regarding the undercut areas **13** described above, as shown in Figure 2, in the preferred embodiment of the invention described herein they are defined by a single circular rib **30** projecting towards the outside of the jacket **2**.

In particular, as shown in detail in Figure 4, the longitudinal cross section of the rib **30** has substantially the shape of a right-angled trapezium, whose sloping side **31** is parallel to the main axis **y** of the holes **10**.

In this way, in the moment when the fixing elements **11** are inserted in said holes **10**, the advance of their free end **12** is aided by the sloping side **31**, so that they counteract both the second upper side **32** substantially perpendicular to the longitudinal axis **x** of the jacket **2**, and above all said sloping side **31**, thus allowing the second cover **5** to be locked on the jacket **2** in both directions along the axis **x**.

In different embodiments of the invention not described herein, the profile of the rib **30** and therefore of the corresponding undercut areas **13** may differ from the one just described, provided that it allows the free end **12** of the fixing elements **11** to be housed therein, so as to determine a counteracting action between the two elements just taken in consideration.

Furthermore, in alternative embodiments of the invention the individual undercut areas **13** may not be defined by a single circular rib **30** but may be obtained by means of several grooves made in specific points along the circumference of the jacket.

As shown in Figure 1, due to the fact that there are no tie rods for closing the motor unit case as in the known art, the first cover **3** does not have the radial projections with the threaded holes as described above.

For this reason, the first cover **3** can be advantageously arranged at the level of the first end **4** of the jacket **2** not from the outside only as before but also introducing the same jacket **2** through the second end **6**, as explained in greater detail below.

This last solution is considered more advantageous for implementing the preferred embodiment of the motor unit **1** of the invention illustrated herein.

As shown in Figure 5 and as explained above, the motor unit **1** of the invention is preferably applied to the structure of a pump **100**, also protected by the present invention, which comprises at least one lifting unit **101**.

Preferably but not necessarily, as shown in the example of Figure 5, the pump **100** is of the submerged type and comprises, in succession from bottom to top, a lifting unit **101** axially connected to the motor unit **1** of the invention, on the opposite end of which there is a condenser element **103**.

Said three units **101**, **1** and **103** are all contained in a single external casing **104**.

In practice, in order to assemble the above mentioned submerged pump **100**, an operator first connects the first cover **3** to the jacket **2**, introducing it in the latter from the second end **6** until reaching the first end **3**, where it is locked through flexible fixing means **32** at the level of a special rib **33** of the jacket **2** facing towards the inside, as shown in Figures 1 or 2.

Successively, even the electric motor of the motor unit **7** with the corresponding transmission shaft **8** is inserted through the second end **6** of the jacket **2**.

Finally, the second cover **5** is arranged on the corresponding second end, in such a way as to close the case of the motor unit **1** of the invention and insulate it from the outside.

In greater detail, according to this last step the internal part **18** of the second cover **5** is arranged on the corresponding end **6** and the fixing elements **11** are successively fixed so that their free ends **12** are housed in the corresponding undercut areas **13** created, as already explained, in the jacket **2**.

Once said operations have been completed, the operator first arranges the sealing unit **20** in said internal part **18** and finally encloses the whole by applying the external part **21** and fixing it to the internal part **18** through the second fixing elements **22**.

On the basis of the above, it is clear that the motor unit **1** that is the subject of the invention achieves all the set objects.

In particular, the invention achieves the object to provide a motor unit that does not have external fixing elements in contact with the liquid to be pumped.

The invention also achieves the further object to provide a motor unit requiring assembly operations that are simpler and easier than those required by the motor units of the known art.

The invention also achieves the object to provide a motor unit that can be preassembled before being installed in the pump.

The invention achieves even the further object to provide a motor unit whose configuration is such as to allow it to be easily transported and stored. Furthermore, the invention also achieves the object to provide a motor unit that is more compact than the motors of the known art.

It finally achieves the object to provide a motor unit that requires a limited number of components.

The motor unit that is the subject of the invention advantageously makes it possible to offer the advantages that, as already explained, consist in optimised tightness between the covers and the jacket, thanks to the fact that the locking means used allow said covers to be fixed directly to the jacket, differently from what happens when tie rods are used.

On implementation, the motor unit and the pump comprising said motor unit that are the subjects of the invention may undergo changes that, though not illustrated or described herein, shall nonetheless be covered by the present patent, provided that they come within the scope of the claims that follow. Where technical features mentioned in any claim are followed by reference signs, those reference sings have been included for the sole purpose of increasing the intelligibility of the claims and accordingly such reference signs do not have any limiting effect on the protection of each element identified by way of example by such reference signs.

## Claims

1. Motor unit (1) preferably applicable to a pump (100), of the type comprising a jacket (2) substantially cylindrical in shape, which is coupled with a first cover (3) at the level of its first end (4) and with a second cover (5) **at the level of its** second end (6) and removably fixed to said jacket via locking means (9), **characterized in that** said locking means (9) comprise a plurality of through holes (10) made in said second cover (5), each one of which has its axis (y) inclined with respect to the longitudinal axis (x) of said jacket (2) and houses a fixing element (11) whose free end (12) faces towards the inside of said jacket (2) and is inserted in a corresponding undercut area (13) that is defined in said jacket (2), **said undercut area (13) having** its convex surface facing towards the outside, in order to house said free end (12) of said fixing elements (11).

2. Motor unit (1) according to claim 1), **characterized in that** each one of said inclined holes (10) has its axis (y) diverging from said longitudinal axis (x) according to the coupling direction (a) of said second cover (5) to said jacket (2).

3. Motor unit (1) according to any of the preceding claims, **characterized in that** each one of said holes (10) has its axis (y) that is skew with respect to said longitudinal axis (x).

4. Motor unit (1) according to any of the preceding claims, **characterized in that** said holes (10) are three.

5. Motor unit (1) according to any of the preceding claims, **characterized in that** said fixing elements (11) are screws (14).

6. Motor unit (1) according to claim 5), **characterized in that** each one of said screws (14) is provided with a sealing element (16) on the underside (15) of its head.

7. Motor unit (1) according to claim 6), **characterized in that** each one of said screws (14) has its body (17) substantially cylindrical at the level of its free end (12) and threaded between said cylindrical free end (12) and said underside (15) of its head.

8. Motor unit (1) according to any of the preceding claims, **characterized in that** said second cover (5) comprises, at the level of its edge, a sealing element (27) that cooperates with said jacket (2) to make the motor unit tight.

9. Motor unit (1) according to any of the preceding claims, **characterized in that** said undercut areas (13) are defined by a single circular rib (30) projecting towards the outside of said jacket (2).

10. Motor unit (1) according to claim 9), **characterized in that** the profile of said rib (30), in longitudinal cross section, has substantially the shape of a right-angled trapezium whose sloping side (31) is parallel to the main axis (y) of said holes (10).

11. Pump (100) of the type comprising a lifting unit (101) axially connected to a motor unit (1) of the type carried out according to any of the preceding claims.

## Patentansprüche

1. Motoreinheit (1), vorzugsweise an einer Pumpe (100) anbringbar, des Typs, der einen im Wesentlichen zylindrisch geformte Verkleidung (2) umfasst, welche auf Ebene ihres ersten Endes (4) mit einem ersten Deckel (3) und auf Ebene ihres zweiten Endes (6) mit einem zweiten Deckel (5) gekuppelt ist, und die mittels Verriegelungsmitteln (9) abnehmbar an der besagten Umhüllung befestigt ist, **dadurch gekennzeichnet, dass** die besagten Verriegelungsmittel (9) eine Vielzahl von in dem besagten, zweiten Deckel (5) angebrachten Durchgangsbohrungen (10) umfassen, von denen jede ihre Achse (y) bezüglich der Längsachse (x) der besagten Umhüllung (2) geneigt hat und ein Befestigungselement (11) aufnimmt, dessen freies Ende (12) zum Inneren der besagten Umhüllung (2) gerichtet und in einen entsprechenden Unterschnittbereich (13) eingefügt ist, der in der besagten Umhüllung (2) definiert ist, wobei der besagte Unterschnittbereich (13) seine konvexe Oberfläche nach Außen gerichtet hat, um das besagte, freie Ende (12) der besagten Befestigungselemente (11) aufzunehmen.

2. Motoreinheit (1) gemäß Patentanspruch 1), **dadurch gekennzeichnet, dass** die Achse (y) jeder der besagten, geneigten Bohrungen (10) gemäß der Kupplungsrichtung (a) des besagten, zweiten Deckels (5) zu der besagten Umhüllung (2) hin von der Längsachse (x) divergiert.

3. Motoreinheit (1) gemäß eines jeden der vorstehenden Patentansprüche, **dadurch gekennzeichnet, dass** die Achse (y) jeder der besagten Bohrungen (10) bezüglich der besagten Längsachse (x) schief steht.

4. Motoreinheit (1) gemäß eines jeden der vorstehenden Patentansprüche, **dadurch gekennzeichnet, dass** die besagten Bohrungen (10) drei sind.

5. Motoreinheit (1) gemäß eines jeden der vorstehenden Patentansprüche, **dadurch gekennzeichnet, dass** die besagten Befestigungselemente (11) Schrauben (14) sind.

6. Motoreinheit (1) gemäß Patentanspruch 5), **dadurch gekennzeichnet, dass** jede der besagten Schrauben (14) an der Unterseite (15) ihres Kopfes ein Dichtelement (16) aufweist.

7. Motoreinheit (1) gemäß Patentanspruch 6), **dadurch gekennzeichnet, dass** der Körper (17) jeder der besagten Schrauben (14) auf der Ebene ihres freien Endes (12) im Wesentlichen zylindrisch ist und zwischen dem besagten zylindrischen, freien Ende (12) und der besagten Unterseite (15) ihres Kopfes ein Gewinde aufweist.

8. Motoreinheit (1) gemäß eines jeden der vorstehenden Patentansprüche, **dadurch gekennzeichnet, dass** der besagte, zweite Deckel (5) auf der Ebene seiner Kante ein Dichtelement (27) aufweist, das mit der besagten Umhüllung (2) zusammenwirkt, um die Motoreinheit abzudichten.

9. Motoreinheit (1) gemäß eines jeden der vorstehenden Patentansprüche, **dadurch gekennzeichnet, dass** die besagten Unterschnittbereiche (13) durch eine einzelne, kreisförmige Rippe (30) definiert sind, welche zum Äußeren der besagten Umhüllung (2) hin hervorsteht.

10. Motoreinheit (1) gemäß Patentanspruch 9), **dadurch gekennzeichnet, dass** das Profil der besagten Rippe (30) im LängsQuerschnitt im Wesentlichen die Form eines rechtwinkligen Trapezes aufweist, dessen schräge Seite (31) parallel zur Hauptachse (y) der besagten Bohrungen (10) steht.

11. Pumpe (100) des Typs, der eine Hubeinheit (101) umfasst, die axial mit einer Motoreinheit (1) des Typs, der gemäß eines jeden der vorstehenden Patentansprüche ausgeführt ist, verbunden ist.

## Revendications

1. Groupe moteur (1) applicable préférablement à une pompe (100), du type comprenant une chemise (2) ayant une forme essentiellement cylindrique qui est accouplée avec un premier couvercle (3) à hauteur de sa première extrémité (4) et avec un deuxième couvercle (5) à hauteur de sa deuxième extrémité (6) et fixée de manière amovible sur ladite chemise par des moyens de blocage (9), **caractérisé en ce que** lesdits moyens de blocage (9) comprennent une pluralité de trous passants (10) réalisés dans ledit deuxième couvercle (5), chacun desquels présente son axe (y) incliné par rapport à l'axe longitudinal (x) de ladite chemise (2) et accueille un élément de fixation (11) dont l'extrémité libre (12) est tournée vers l'intérieur de ladite chemise (2) et est insérée dans une zone de contre-dépouille correspondante (13) qui est définie dans ladite chemise (2), ladite zone de contre-dépouille (13) ayant sa surface convexe tournée vers l'extérieur de façon à loger ladite extrémité libre (12) desdits éléments de fixation (11).

2. Groupe moteur (1) selon la revendication 1), **caractérisé en ce que** chacun desdits trous inclinés (10) présente son axe (y) divergeant dudit axe longitudinal (x) selon la direction d'accouplement (a) dudit deuxième couvercle (5) à ladite chemise (2).

3. Groupe moteur (1) selon l'une quelconque des revendications précédentes, **caractérisé en ce que** chacun desdits trous (10) présente son axe (y) biaisé par rapport audit axe longitudinal (x).

4. Groupe moteur (1) selon l'une quelconque des revendications précédentes, **caractérisé en ce que** lesdits trous (10) sont au nombre de trois.

5. Groupe moteur (1) selon l'une quelconque des revendications précédentes, **caractérisé en ce que** lesdits éléments de fixation (11) sont des vis (14).

6. Groupe moteur (1) selon la revendication 5), **caractérisé en ce que** chacune desdites vis (14) présente un élément d'étanchéité (16) sur la partie inférieure (15) de sa tête.

7. Groupe moteur (1) selon la revendication 6), **caractérisé en ce que** chacune desdites vis (14) présente son corps (17) essentiellement cylindrique à hauteur de son extrémité libre (12) et fileté entre ladite extrémité libre cylindrique (12) et ladite partie inférieure (15) de sa tête.

8. Groupe moteur (1) selon l'une quelconque des revendications précédentes, **caractérisé en ce que** ledit deuxième couvercle (5) comprend, à hauteur de son bord, un élément d'étanchéité (27) qui coopère avec ladite chemise (2) afin de rendre le groupe moteur étanche.

9. Groupe moteur (1) selon l'une quelconque des revendications précédentes, **caractérisé en ce que** lesdites zones de contre-dépouille (13) sont définies par une seule nervure circulaire (30) saillant vers l'extérieur de ladite chemise (2).

10. Groupe moteur (1) selon la revendication 9), **caractérisé en ce que** ladite nervure (30) présente, selon une section longitudinale, un profil essentiellement en forme d'un trapèze rectangulaire dont le côté oblique (31) est parallèle à l'axe principal (y) desdits trous (10).

11. Pompe (100) du type comprenant un groupe de levage (101) relié axialement à un groupe moteur (1) du type réalisé selon l'une quelconque des revendications précédentes.
